# EUROPEAN PATENT SPECIFICATION

(11) **EP 0 362 241 B1**
(45) Date of publication and mention of the grant of the patent: **22.06.1994**
(21) Application number: 88904437.6
(22) Date of filing: 24.05.1988
(51) Int. Cl.: B21B 27/10, B23Q 11/10

(54) **COOLANT FLOW CONTROL**
STRÖMUNGSREGELUNG FÜR KÜHLMITTEL
REGULATION D'UN COURANT D'AGENT REFRIGERANT

(30) Priority: 28.05.1987 AU 2206/87
(43) Date of publication of application: 11.04.1990
(73) Proprietor: EDWARDS, William John, Carey Bay, NSW 2283 (AU)
(72) Inventor: EDWARDS, William John, Carey Bay, NSW 2283 (AU)
(74) Representative: Boydell, John Christopher
(86) International application number: AU8800156
(87) International publication number: WO8809230

(56) References cited:
- AU-A- 4 558 368
- DE-B- 2 038 873
- FR-A- 1 564 042
- GB-A- 1 238 804
- GB-A- 2 015 401
- JP-A-55 094 718
- JP-A-59 010 404
- JP-A-61 071 113
- JP-A-62 021 413
- SU-A- 719 723
- US-A- 3 709 012
- US-A- 4 706 480
- Patent Abstracts of Japan, C-66, pages 71 & JP-A-54-125162 (SUMITOMO KINZOKU KOGYO K.K.) 28 September 1979
- Derwent Abstract Accession no. 65411 E/31, Class P51, SU-A-869881 (DON FERR METAL INST) 10 October 1981

## Description

The present invention relates according to claim 1 to a method for controlling the temperature of a work roll or work piece and according to claim 13 to an apparatus for controlling the temperature of a work roll or work piece respectively; see JP-A-55 094 718.

The invention is applicable for supply of a coolant or lubricant to a mill roll.

The term "tool" is used broadly in this specification to include a mill roll as well as machine tools and the term work piece includes ingots, strip and other forms of workpiece.

### BACKGROUND ART

In rolling mills such as are used for production of high quality rolled flat metal strip, any variation in temperature over a work roll surface may cause differential radial expansion of the mill roll, referred to as thermal camber, and thus result in transverse variations in thickness and flatness of the rolled product. Control of strip flatness (shape) requires maintenance of mill roll thermal camber within close tolerances.

Variations in the transverse thickness profile during rolling may cause non-uniform lengths to be produced at different locations across the strip width and these result in a non-uniform transverse stress distribution which may cause buckling. When rolling under tension, the buckling usually does not occur and a shapemeter then measures the transverse stress variation which is interpreted as the tendency to subsequent buckling (or bad shape).

It is usual to provide at least one row of spray nozzles through which a coolant and/or lubricant is applied to the roll surface. Usually the nozzles are disposed in three or more transverse zones, the nozzles in each zone being supplied with fluid at a pressure which differs from each other zone. The flow rate of coolant through the pressure supplied to each zone of nozzles, or through each individual nozzle, is adjusted to control roll expansion and/or level of lubrication to suit the current rolling requirements. The latter depend in a complex manner upon mill loads, roll deflections and ground profiles, workpiece thickness and temperature profile and roll bending settings.

It has been practiced to locate a shape meter downstream of the mill roll and to use feedback signals indicative of strip shape variation to control thermal camber in the roll. The shape meter is adapted to measure variations in the transverse stress and/or temperature distribution in the product resulting from rolling, including the effect of mill roll distortion. The measurements are made at a plurality of points in the product width direction. Each spray nozzle may then be provided with a separate valve and the shape meter may be used for generating feedback signals to control individual valves. Individual valves are controlled to provide a greater flow rate of coolant to parts of the mill roll or work piece which are excessively hot or have more radial expansion than is desirable. In this way, variations in thermal distortion and consequent variations in strip shape, may be minimized.

On-off control, rather than analogue control, of valves is often used to reduce the complexity of communication interfaces between automation equipment and the valve actuators and to reduce valve costs, variable flow being achieved by use of multiple valves of different sizes in each zone and/or by varying the ratio of "on-time" to "off-time". Known systems for roll shape feedback control utilize a large number of electric or pneumatically controlled valves which must be operable in an extremely hostile environment and are consequently each of costly construction. The valve nozzles are susceptible to blockage and because one blocked valve nozzle could result in roll overheating, it is usual to have a redundant set of "stand-by" valves and to stop the line if a severe blockage occurs.

An object of the present invention is the provision of means for supplying a coolant or lubricant to a mill roll or other tool or work piece which avoids at least some of the disadvantages of the prior art.

According to one aspect the invention consists in a method for controlling the temperature of a work roll or work piece in a rolling mill, said method comprising the steps of: providing a first flow of a coolant or lubricant to a primary inlet of a vortex valve; providing a second flow of a coolant or lubricant having a characteristic substantially different from that of said first flow to a control inlet of the vortex valve; mixing the first flow with the second flow within the vortex valve; conducting a mixed outflow from an outlet of the vortex valve to the work roll or work piece; varying the flow rate of the second flow thereby to control the outflow conducted from the vortex valve to the work roll or work piece in respect of both flow rate and said characteristic.

In preferred embodiments of the invention at least a portion of the spent coolant or lubricant after extraction of heat is recycled to the primary inlet.

Also for preference, the temperature of the coolant or lubricant provided to the primary inlet of the vortex valve differs from that provided to the control inlet.

The fluid supplied to the primary inlet may be at a different concentration from the fluid supplied to the control inlet. This configuration enables a different concentration of lubricant to be used selectively on individual headers or, if required, for individual nozzles. The latter facility has advantages in that it allows the edge regions of a hot strip rolling mill to be preferentially lubricated with major advantages in wear reduction and without excessive contamination of the coolant system by lubricant. Use of a vortex valve allows excellent mixing to be achieved and, at the same time, provides variable control over the concentration. A vortex valve may be used in the manner described to achieve effective mixing of rolling oils with a recirculating coolant system. A high pressure control flow should then be used to ensure maximum turbulence in the exit region of the vortex valve.

Desirably, two valves are used at each location across the work roll of a rolling mill, one valve for selectively applying lubricant and the other valve to selectively apply coolant so as to control the roll expansion, thereby maintaining a more constant strip thickness profile and reducing the amount of customary edge thickness tapering in the region up to 200 mm from the strip edge.

According to a further aspect, the invention consists in an apparatus for controlling the temperature of a work roll or work piece in a rolling mill, said apparatus comprising a vortex valve having a primary inlet adapted to receive a first flow of a coolant or lubricant, a control flow inlet adapted to receive a second flow of a coolant or lubricant having a characteristic substantially different from that of the first flow, and an outlet for conducting a mixed outflow from the vortex valve to the work roll or work piece, wherein the flow rate of the second flow is varied to control the outflow conducted from the vortex valve to the roll or work piece in respect of both flow rate and said characteristic.

Various embodiments of the invention will now be described by way of example only with reference to Figures 1 to 5 wherein:
Figure 1A is a schematic plan view of a vortex valve for use in the invention;
Figure 1B shows the valve of Figure 1A in schematic elevation;
Figure 2 is a graph useful for illustrating characteristics typical of a vortex valve such as shown in Figure 1 wherein exit flow is shown on the upright axis and control flow pressure is shown on the horizontal axis;
Figure 3 is a schematic diagram of an embodiment of the invention; and
Figures 4 and 5 show schematically a configuration which may optionally be used in the embodiment of Figure 3.

### DESCRIPTION OF PREFERRED EMBODIMENTS

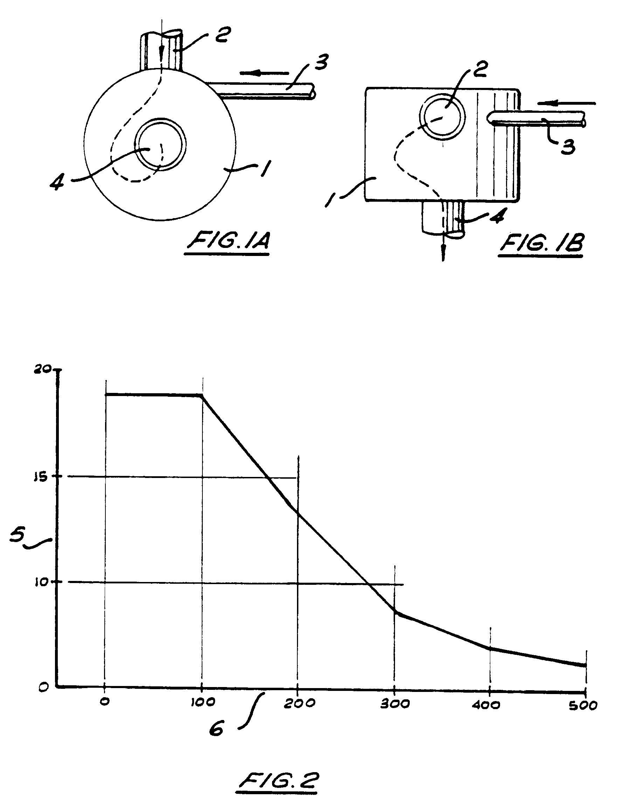

With reference to Figure 1, there is shown a vortex valve comprising a generally cylindrical conical or frustro conical valve chamber 1 having a primary inlet 2 which is radially directed; a control inlet 3 which is tangentially directed in a direction transverse primary inlet 2; and having an outlet 4 which preferably extends in an axial direction.

In the absence of a flow through the control inlet 3, a primary flow admitted to valve chamber 1 via primary inlet 2 exits from outlet 4.

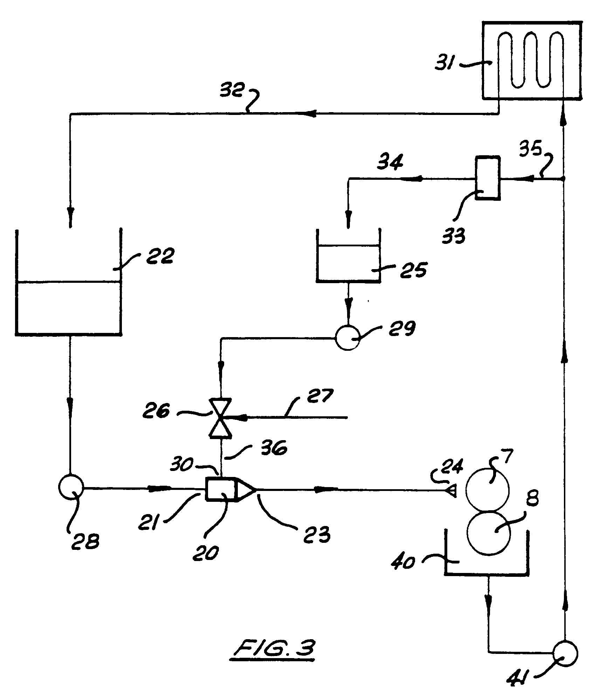

If a control flow is admitted through control inlet 3 at a high pressure in comparison with the primary flow, the exit flow from the outlet 4 is reduced. Figure 2 is a graph showing total flow (L/min) on the vertical axis 5 and control pressure (kPa) on the horizontal axis 6 for a typical vortex valve operating with main supply pressure equal to 100 kPa. The vortex valve to which Figure 2 applies has a chamber 1 of 50 mm diameter, an inlet tube 2 of 12.5 mm diameter and a single entry control flow tube 3 of 2.6 mm diameter. As shown by the graph, the total flow at outlet 4 reduces as a function of increase in the control flow and approaches a minimum flow. Vortex valves per se are well known in many designs or configurations and require no further description.

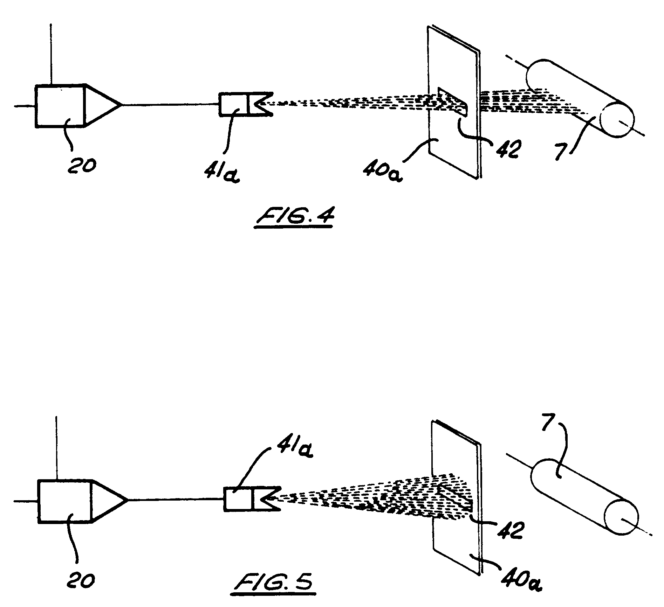

With reference to Figure 3 there is shown schematically one embodiment of the invention. The embodiment shows a stand of a strip mill having a top roll 7 and a bottom roll 8.

There is further provided a vortex valve 20 having a primary inlet 21 adapted to receive coolant from a header supply 22 via a primary flow pump 28.

The outlet 23 of valve 20 is adapted either to spray directly onto a mill roll 7 or preferably is conducted to a respective spray nozzle 24 directed at roll 7.

A second flow 36 of coolant is fed to control inlet 30 of vortex valve 20 by means of pump 29 from a secondary supply reservoir 25 at a flow rate which may be varied by means of a control valve 26 which is electrically or pneumatically operated by a respective feedback control signal 27 from a shape meter (not shown in Figure 3) located downstream of the mill rolls. The shape meter generates a signal 27 indicative of a change in the flatness or stress distribution of rolled strip on a line in the strip rolling direction corresponding with the position of nozzle 24 with respect to the mill roll 7. In use feedback signal 27 operates control valve 26 to increase or decrease control flow from reservoir 25 to vortex valve control inlet 30. If the control flow 36 to valve inlet 30 increases, the total flow of coolant from that vortex valve outlet 23 to the mill roll 5 decreases.

In a preferred embodiment the control flow coolant at 30 is at a higher temperature than the primary flow coolant at 21.

Hot coolant which is spent after cooling the mill rolls is pumped from sump 40 by a pump 41 through a heat exchanger 31 whereby waste heat is extracted and the resultant cold coolant is returned via line 32 to header supply 22. A fraction of the hot coolant is taken off at 35 between pump 41 and heat exchanger 31, passed through a filter 33 and relieved via line 34 to secondary supply reservoir 25 from which the control flow emanates.

Consequently when the control flow into inlet 30 is at a maximum, the flow rate of coolant from outlet 23 is not only at a minimum but is at a maximum temperature, consisting predominantly of hot coolant. As the control flow of the hot fluid into inlet 30 is reduced the flow rate of cold coolant increases, the proportion of hot control flow in the outflowing mixture is reduced and the temperature of the outflow from outlet 23 falls.

The system thus utilizes both a change in flow rate, and a change in temperature of the coolant to control the roll temperature.

In practice a plurality of nozzles 24 are disposed in a row extending the width of the top roll and/or of the bottom roll.

Each nozzle of the plurality is in communication with the outlet 23 of a corresponding one of a plurality of vortex valves 20. The control flow of each vortex valve 20 is varied by means of a corresponding respective control valve 26, or if desired a group of vortex valves 20, may be controlled by a shared control valve 26.

More than one nozzle 24 may be fed from a vortex valve.

Thus, for example, an upper and corresponding lower roll nozzle may both be fed by one vortex valve outlet 23; or by separate vortex valves controlled by a single control valve 26; or by separate vortex valves 20 each under the control of a respective control valve 26.

The control valves may be of an analogue type controlled by signals from a shape meter or similar transducer or may be an of/off valve, the ratio of "on-time" to "off-time" being influenced by the feed back signals

Similarly, if a transverse temperature distribution for the roll or rolled product is measured, instead of the strip shape, then it may be controlled in a similar manner to that described above for strip shape control Thus the control signal may be provided by a temperature transducer or other transducers
For preference in case of maintenance, and to provide a better environment for the control valves, the on-off control valves are located away from the headers at the side of a mill. A pump provides a high pressure supply of filtered control fluid with a common supply being available to all stands. Typically about 10% of the total coolant flow is used for control. In some instances, for example, if different fluid temperatures are involved, higher control flow fractions may be advantageous.

The control signal flows are preferably diverted by flexible armoured hydraulic cables provided with quick release couplings.

For preference the connection of fluid control signals to individual vortex valves is accomplished by means of a distribution disc located at one or both ends of each flexible control flow cable. This enables the number of control valves to be minimised. It also allows the number of control signals in the flexible cables to be minimised whilst maintaining a standard design of header in which each vortex valve is individually connected to the distribution disc at the point where the control cable connects to the header. The distribution discs have channels or grooves which provide an arbitrary connection between the inlet control ports and the outlet ports to the vortex valves.

Advantages of the system include that a greatly reduced number of control valves is required for a given degree of control since more than one spray nozzle can be controlled by each vortex valve and since less than half the number of control valves is needed in comparison with conventional headers since redundancy is unnecessary.

The vortex valves may be adapted for automatic unblocking of valves and nozzles, for example my means of a counter flow and filter system involving the reduction of the primary supply pressure and increasing the control pressure to maximum This can cause a reversal of the primary flow and unblocking of the inlet pipe or inlet filters on the primary supply.

The system is able to operate with low pressure valves and to use a standardized modular design for all widths of roll. The system has no moving parts and is less susceptible to blockage. A minimum flow is guaranteed under all normal operating conditions.

Surprisingly we have found that when the fluid from outlet 4 of a vortex valve is directed through a "V" slot or similarly shaped nozzle, the emanating spray may be changed from fan-shaped spray envelope to a conical-shaped spray envelope depending on the control flow and other factors. This characteristics is controlled by varying the distance from the point where the outlet flow leaves the conical chamber to the spray nozzle. The longer the distance, the less rotational swirl remains in the flow at the spray nozzle and the less tendency there is to form a conical shape of envelope ("conical spray"). This means that, when the control flow is off, the fluid emerging from the nozzle will have a low angular momentum and little tendency to form a conical spray for the case of a "V" jet. However, when the control flow is applied, the spray characteristic will change to that of a conical spray. This characteristic may be utilized in two ways. Firstly, it may be used to generate conical-shaped sprays without the complexity and blockage tendencies of special-purpose nozzles of conventional design. Secondly, by interposing a plate containing a carefully sized slot, between the nozzle and the roll or workpiece, additional flow rate variations are possible. This is achieved by locating the nozzle close to the vortex chamber exit to maximise the tendency to form a conical spray shape. Therefore, when the control flow is at a maximum, the normally fan-shaped spray which passes through the slot when the control flow is off is converted to a conical spray which impinges on the interposed plate and little, if any, flow goes to the roll or workpiece. By this means, the effective control range of the roll cooling or lubricating device is effectively increased significantly.

With reference to Figure 4 and Figure 5 a shield or plate 40 defining a slotted apperture 42 is shown with impinging sprays from a "V" jet nozzle 41 for the cases of control flow on (Figure 4), and control flow off (Figure 5). Figure 4 shows how with control flow to valve 20 off a major proportion of the fan-shaped spray passes through slot 42 and impinges on roll 7. In Figure 5, the control flow to valve 20 is "off", the spray is conical and the major proportion of the conical-shaped spray is unable to pass through the narrow rectangular slot 42.

The use of conical spray shapes and associated, modified coolant droplet characteristics also alters the heat transfer coefficient between the coolant and the roll and may be used to advantage in particular applications of the technology.

Because vortex valves store angular momentum when the control flow is "on" the valve has "inertia" and thus a lower frequency pulse rate may be used when achieving modulated flow with a defined on-time and off-time ratio.

As will be apparent to those skilled in the art from the teaching hereof, the invention may be applied in other embodiments and in other forms without departing from the scope of the claims.

## Claims

1. A method for controlling the temperature of a work roll (7,8) or work piece in a rolling mill, said method comprising the steps of:
(a) providing a first flow of a coolant or lubricant to a primary inlet (21) of a vortex valve (20);
(b) providing a second flow (36) of a coolant or lubricant having a characteristic substantially different from that of said first flow to a control inlet (30) of the vortex valve;
(c) mixing the first flow with the second flow within the vortex valve;
(d) conducting a mixed outflow (23) from an outlet (4) of the vortex valve to the work roll or work piece;
(e) varying the flow rate of the second flow thereby to control the outflow conducted from the vortex valve to the work roll or work piece in respect of both flow rate and said characteristic.

2. A method according to claim 1, wherein said characteristic is temperature.

3. A method according to claim 1, wherein said characteristic is concentration.

4. A method according to claim 1, wherein said characteristic is fluid pressure.

5. A method according to claim 1, including the further steps of:
monitoring a variable parameter of the work piece during rolling;
generating a control signal (17) indicative of variations in said parameter; and
varying the flow rate of the second flow (36) in response to said control signal.

6. A method according to claim 1, wherein at least a portion (32) of spent coolant or lubricant is recycled to the primary inlet of the vortex valve.

7. A method according to claim 1, wherein two vortex valves are used, one of said valves selectively supplying lubricant and the other of said valves selectively supplying coolant to the roll or work piece.

8. A method according to claim 5, wherein the flow rate of the second flow is varied in response to a control signal indicative of variations in the flatness of the work piece during rolling.

9. A method according to claim 5, wherein the flow rate of the second flow is varied in response to a control signal indicative of variations in the temperature of the roll or work piece during rolling.

10. A method according to claim 5, wherein the flow rate of the second flow is varied in response to a control signal indicative of variations in the stress distribution of the roll or work piece during rolling.

11. A method according to claim 1, further including a step of directing the outflow through a nozzle (41a) and changing the shape of spray envelope emanating from the nozzle by varying the second control flow into said vortex valve.

12. A method according to claim 11, further including the step of interposing an apertured shield (40a) intermediate the nozzle and the roll or work piece, said shield permitting a relatively high proportion of the spray to pass through an aperture (42) in one configuration of spray envelope and a relatively lower proportion to pass at another configuration of spray envelope thereby to provide an additional degree of control over the outflow reaching the roll or work piece.

13. An apparatus for controlling the temperature of a work roll (7,8) or work piece in a rolling mill said apparatus comprising a vortex valve (20) having a primary inlet (21) adapted to receive a first flow of a coolant or lubricant, a control flow inlet (30) adapted to receive a second flow (36) of a coolant or lubricant having a characteristic substantially different from that of the first flow, and an outlet for conducting a mixed outflow (23) from the vortex valve to the work roll or work piece, wherein the flow rate of the second flow is varied to control the outflow conducted from the vortex valve to the roll or work piece in respect of both flow rate and said characteristic.

14. The apparatus according to claim 13, wherein said characteristic is temperature.

15. The apparatus according to claim 13, wherein said characteristic is concentration.

16. The apparatus according to claim 13, wherein said characteristic is fluid pressure.

17. The apparatus according to claim 13, further comprising means for monitoring a variable parameter of the work piece during rolling, means for generating a control signal (27) indicative of variations in said parameter, and means (26) for varying the flow rate of the second flow in response to said control signal.

18. The apparatus according to claim 13, wherein at least a portion (32) of spent coolant or lubricant is recycled to the primary inlet of the vortex valve.

19. The apparatus according to claim 13, wherein two vortex valves are used, one of said valves selectively supplying lubricant and the other of said valves selectively supplying coolant to the roll or work piece.

20. The apparatus according to claim 17, wherein the flow rate of the second flow is varied in response to a control signal indicative of a change in the flatness of the work piece during rolling.

21. The apparatus according to claim 17, wherein the flow rate of the second flow is varied in response to a control signal indicative of a change in the temperature of the roll or work piece during rolling.

22. The apparatus according to claim 17, wherein the flow rate of the second flow is varied in response to a control signal indicative of a change in the stress distribution of the work piece during rolling.

23. The apparatus according to claim 13, further including means for directing the outflow through a nozzle (41a) such that the shape of spray envelope emanating from the nozzle is controllable by varying the second control flow into said vortex valve.

24. The apparatus according to claim 23, further including an apertured shield (40a) disposed intermediate the nozzle and the roll or work piece, said shield permitting a relatively high proportion of the spray to pass through the aperture (42) in one configuration of spray envelope and a relatively lower proportion to pass at another configuration of spray envelope thereby to provide an additional degree of control over the outflow reaching the roll or work piece.

## Patentansprüche

1. Verfahren zum Regeln der Temperatur einer Arbeitswalze (7,8) oder eines Werkstückes in einer Walzenstraße, das die Schritte umfaßt:
(a) Bereitstellen eines ersten Flusses eines Kühl- oder Schmiermittels zu einem primären Einlaß (21) eines Vortexventils (20);
(b) Bereitstellen eines zweiten Flusses (36) eines Kühl- oder Schmiermittels, das eine im wesentlichen unterschiedliche Charakteristik von der des ersten Flusses hat, zu einem Regeleinlaß (30) des Vortexventils;
(c) Mischen des ersten Flusses mit dem zweiten Fluß innerhalb des Vortexventils;
(d) Hinführen eines gemischen Ausflusses (23) aus einem Auslaß (4) des Vortexventils zu der Arbeitswalze oder dem Werkstück;
(e) Variieren der Fließrate des zweiten Flusses, um so den Ausfluß, der aus dem Vortexventil zur Arbeitswalze oder dem Werkstück geführt wird, sowohl bezüglich der Fließrate als auch bezüglich dieser Charakteristik zu regeln.

2. Verfahren nach Anspruch 1, bei dem die Charakteristik die Temperatur ist.

3. Verfahren nach Anspruch 1, bei dem die Charakteristik die Konzentration ist.

4. Verfahren nach Anspruch 1, bei dem die Charakteristik der Flüssigkeitsdruck ist.

5. Verfahren nach Anspruch 1, das die weiteren Schritte umfaßt:
Überwachen eines variablen Parameters des Werkstückes während des Walzvorganges;
Erzeugen eines Regelsignals (17), das Variationen dieses Parameters anzeigt, und
Variieren der Fließrate des zweiten Flusses (36) als Antwort auf dieses Regelsignal.

6. Verfahren nach Anspruch 1, bei dem mindestens ein Teil (32) des verbrauchten Kühl- oder Schmiermittels zum primären Einlaß des Vortexventils zurückgeführt wird.

7. Verfahren nach Anspruch 1, bei dem zwei Vortexventile eingesetzt werden, von denen eines selektiv Schmiermittel und das andere selektiv Kühlmittel der Walze oder dem Werkstück zuführt.

8. Verfahren nach Anspruch 5, bei dem die Fließrate des zweiten Flusses als Antwort auf ein Regelsignal variiert wird, das Variationen in der Flachheit des Werkstückes während des Walzvorganges anzeigt.

9. Verfahren nach Anspruch 5, bei dem die Fließrate des zweiten Flusses als Antwort auf ein Regelsignal variiert wird, das Variationen der Temperatur der Walze oder des Werkstückes während des Walzvorganges anzeigt.

10. Verfahren nach Anspruch 5, bei dem die Fließrate des zweiten Flusses als Antwort auf ein Regelsignal variiert wird, das Variationen in der Spannungsverteilung der Walze oder des Werkstückes während des Walzvorganges anzeigt.

11. Verfahren nach Anspruch 1, das ferner einen Schritt des Hindurchführens des Ausflusses durch eine Düse (41a) und des Verändere der Form der aus der Düse austretenden Sprühguthülle durch Variieren des zweiten Regelflusses in das Vortexventil umfaßt.

12. Verfahren nach Anspruch 11, das ferner den Schritt der Zwischenanordnung eines mit Öffnung versehenen Schildes (40a) zwischen der Düse und der Walze oder dem Werkstück umfaßt, wobei der Schild es erlaubt, daß bei einer Konfiguration der Sprühguthülle ein relativ hoher Anteil des Sprühgutes durch eine Öffnung (42) hindurchtritt und bei einer anderen Konfiguration der Sprühguthülle ein relativ geringerer Anteil hindurchgeht, wodurch ein zusätzliches Maß an Regelung über den die Walze oder das Werkstück erreichenden Ausfluß erreicht wird.

13. Vorrichtung zum Regeln der Temperatur einer Arbeitswalze (7,8) oder eines Werkstücks in einer Walzenstraße, die umfaßt: ein Vortexventil (20) mit einem primären Einlaß (21), der zur Aufnahme eines ersten Flusses eines Kühl- oder Schmiermittels ausgestaltet ist, einem Regelflußeinlaß (30), der zur Aufnahme eines zweiten Flusses (36) eines Kühl- oder Schmiermittels ausgestaltet ist, das eine im wesentlichen unterschiedliche Charakteristik von der des ersten Flusses hat, und einem Auslaß, um einen gemischten Ausfluß (23) aus dem Vortexventil zur Arbeitswalze oder dem Werkstück zu führen, wobei die Fließrate des zweiten Flusses variiert wird, um den aus dem Vortexventil zur Walze oder dem Werkstück gerichteten Ausfluß sowohl bezüglich der Fließrate als auch der Charakteristik zu regeln.

14. Vorrichtung nach Anspruch 13, bei der die Charakteristik die Temperatur ist.

15. Vorrichtung nach Anspruch 13, bei der die Charakteristik die Konzentration ist.

16. Vorrichtung nach Anspruch 13, bei der die Charakteristick der Flüssigkeitsdruck ist.

17. Vorrichtung nach Anspruch 13, die ferner Mittel zum Überwachen eines variablen Parameters des Werkstückes während des Walzvorganges;
Mittel zum Erzeugen eines Regelsignals (27), das Variationen dieses Parameters anzeigt, und
Mittel (26) zum Variieren der Fließrate des zweiten Flusses als Antwort auf dieses Regelsignal umfaßt.

18. Vorrichtung nach Anspruch 13, bei der mindestens ein Teil (32) des verbrauchten Kühl- oder Schmiermittels zum primären Einlaß des Vortexventils zurückgeführt wird.

19. Vorrichtung nach Anspruch 13, bei der zwei Vortexventile eingesetzt werden, von denen eines selektiv Schmiermittel und das andere selektiv Kühlmittel der Walze oder dem Werkstück zuführt.

20. Vorrichtung nach Anspruch 17, bei der die Fließrate des zweiten Flusses als Antwort auf ein Regelsignal variiert wird, das Variationen in der Flachheit des Werkstückes während des Walzvorganges anzeigt.

21. Vorrichtung nach Anspruch 17, bei der die Fließrate des zweiten Flusses als Antwort auf ein Regelsignal variiert wird, das Variationen der Temperatur der Walze oder des Werkstückes während des Walzvorganges anzeigt.

22. Vorrichtung nach Anspruch 17, bei der die Fließrate des zweiten Flusses als Antwort auf ein Regelsignal variiert wird, das Variationen in der Spannungsverteilung der Walze oder des Werkstückes während des Walzvorganges anzeigt.

23. Vorrichtung nach Anspruch 13, das ferner Mittel zum Hindurchführen des Ausflusses durch eine Düse (41a) umfaßt, so daß die Form der aus der Düse austretenden Sprühguthülle durch Variieren des zweiten Regelflusses in das Vortexventil geregelt wird.

24. Vorrichtung nach Anspruch 23, die ferner die Mitverwendung eines mit Öffnung versehenen Schildes (40a) zwischen der Düse und der Walze oder dem Werkstück umfaßt, wobei der Schild es erlaubt, daß bei einer Konfiguration der Sprühguthülle ein relativ hoher Anteil des Sprühgutes durch die Öffnung (42) hindurchtritt und bei einer anderen Konfiguration der Sprühguthülle ein relativ geringerer Anteil hindurchgeht, wodurch ein zusätzliches Maß an Regelung über den die Walze oder das Werkstück erreichenden Ausfluß erreicht wird.

## Revendications

1. Procédé de commande de la température d'un rouleau (7, 8) ou d'une pièce dans un laminoir, ledit procédé comprenant les étapes suivantes :
(a) appliquer un premier flux d'un réfrigérant ou d'un lubrifiant à une entrée primaire (21) d'une vanne à tourbillons (20) ;
(b) appliquer un second flux (36) d'un réfrigérant ou d'un lubrifiant dont ta caractéristique est nettement différente de celle du premier flux à une entrée de commande (30) de la vanne à tourbillons;
(c) mélanger le premier flux avec le second flux à l'intérieur de la vanne à tourbillons ;
(d) orienter un flux mélangé sortant (23) depuis une sortie (4) de ta vanne à tourbillons jusqu'au rouleau ou à la pièce ;
(e) modifier le débit du second flux de façon à commander le flux de sortie orienté depuis la vanne à tourbillons vers le rouleau ou la pièce par rapport, à la fois, au débit et à ladite caractéristique.

2. Procédé selon la revendication 1, dans lequel ladite caractéristique est la température.

3. Procédé selon la revendication 1, dans lequel ladite caractéristique est la concentration.

4. Procédé selon la revendication 1, dans lequel ladite caractéristique est la pression de fluide.

5. Procédé sleon la revendication 1, comprenant en outre les étapes consistant à :
- surveiller un paramètre variable de la pièce pendant le laminage ;
- créer un signal de commande (17) significatif des variations dudit paramètre ; et
- modifier le débit du second flux (36) en réponse audit signal de commande.

6. Procédé selon la revendication 1, dans lequel une partie (32) au moins du réfrigérant ou du lubrifiant utilisé est recyclée vers l'entrée primaire de la vanne à tourbillons.

7. Procédé selon la revendication 1, dans lequel on utilise deux vannes à tourbillons, la première desdites vannes amenant sélectivement un lubrifiant et la seconde desdites vannes amenant sélectivement un réfrigérant au rouleau ou à la pièce.

8. Procédé selon la revendication 5, dans lequel le débit du second flux est modifié en réponse à un signal de commande indiquant les variations de la pièce pendant le laminage.

9. Procédé selon la revendication 5, dans lequel le débit du second flux est modifié en réponse à un signal de commande indiquant les variations de la température du rouleau ou de la pièce pendant le laminage.

10. Procédé selon la revendication 5, dans lequel te débit du second flux est modifié en réponse à un signal de commande indiquant les variations de la répartition des efforts, dans le rouleau ou ta pièce pendant le laminage.

11. Procédé selon la revendication 1, comprenant en outre une étape qui consiste à orienter le flux sortant d'un ajutage (41a) et à modifier la forme de l'enveloppe du nuage s'échappant de l'ajutage en faisant varier le second flux de commande appliqué à la vanne à tourbillons.

12. Procédé selon la revendication 11, comprenant en outre l'étape qui consiste à intercaler un écran (40a) représentant une ouverture en une position intermédiaire entre l'ajutage et te rouleau ou la pièce, ledit écran permettant à une proportion relativement élevée du nuage de traverser une ouverture (42) lorsque l'enveloppe du nuage présente une première configuration et à une proportion relativement plus faible de passer lorsque l'enveloppe du nuage présente une autre configuration afin d'exercer ainsi un dégré supplémentaire de commande sur le flux atteignant le rouleau ou la pièce.

13. Appareil pour commander la température d'un rouleau (7, 8) ou d'une pièce dans un laminoir, ledit appareil comprenant une vanne à tourbillons (20) qui présente une entrée primaire (21) conçue pour recevoir un premier flux d'un réfrigérant ou d'un lubriffiant, une entrée de flux de commande (30) propre à recevoir un second flux (36) d'un réfrigérant ou d'un lubrifiant dont la caractéristique est sensiblement différente de celle du premier flux, et une sortie pour acheminer un flux sortant mélangé (23) depuis la vanne à tourbillons jusqu'au rouleau ou à la pièce, dans lequel le débit du second flux est modifié pour commander le flux sortant acheminé entre la vanne à tourbillons et le rouleau ou la pièce par rapport, à ta fois, au débit et à ladite caractéristique.

14. Appareil selon la revendication 13, dans lequel ladite caractéristique est la température.

15. Appareil selon la revendication 13, dans lequel ladite caractéristique est la concentration.

16. Appareil selon le revendication 13, dans lequel ladite caractéristique est la pression de fluide.

17. Appareil selon la revendication 13, comprenant en outre des moyens pour surveiller un paramètre variable de ta pièce pendant le laminage, des moyens pour délivrer un signal de commande (27) significatif des variations dudit paramètre, et des moyens (26) pour faire varier le débit du second flux en réponse audit signal de commande.

18. Appareil selon la revendication 13, dans lequel au moins une partie (32) du réfrigérant ou du lubrifiant utilisé est recyclée vers l'entrée primaire de la vanne à tourbillons.

19. Appareil selon la revendication 13, dans lequel on utilise deux vannes à tourbillons, la première desdites vannes amenant sélectivement un lubrifiant et la seconde desdites vannes amenant sélectivement un réfrigérant au rouleau ou à la pièce.

20. Appareil selon la revendication 17, dans lequel le débit du second flux est modifié en réponse à un signal de commande significatif d'une variation de la planéité de la pièce pendant le laminage.

21. Appareil selon la revendication 17, dans lequel le débit du second flux est modifié en réponse à un signal de commande indiquant une variation de la température du rouleau ou de la pièce pendant le laminage.

22. Appareil selon la revendication 17, dans lequel le débit du second flux est modifié en réponse à un signal de commande significatif d'une variation de la répartition des contraintes dans la pièce pendant le laminage.

23. Appareil selon la revendication 13, comprenant en outre des moyens pour acheminer le flux sortant par un ajutage (41a) de manière telle que la forme de l'enveloppe du nuage s'échappant de l'ajutage puisse être commandée en faisant varier le second flux de commande appliqué à ladite vanne à tourbillons.

24. Appareil selon la revendication 23, comprenant en outre un écran présentant une ouverture (40a) placée en une position intermédiaire entre l'ajutage et le rouleau ou la pièce, ledit écran permettant à une proportion relativement élevée du nuage de traverser l'ouverture (42) pour une première configuration de l'enveloppe du nuage et à une proportion relativement plus faible de la traverser dans une autre configuration de l'enveloppe du nuage de façon à prévoir ainsi un dégré supplémentaire de commande sur le flux sortant atteignant le rouleau ou la pièce.
